# EUROPEAN PATENT SPECIFICATION

(11) **EP 0 977 683 B1**
(45) Date of publication and mention of the grant of the patent: **02.04.2003**
(21) Application number: 98917319.0
(22) Date of filing: 21.04.1998
(51) Int. Cl.: B62D 9/00, B62D 7/06, B60G 9/02

(54) **FRONT AXLE SUSPENSION**
VORDERACHSAUFHÄNGUNG
SUSPENSION DE L'ESSIEU AVANT

(30) Priority: 22.04.1997 IT BO970238
(43) Date of publication of application: 09.02.2000
(73) Proprietor: CNH Italia S.p.A., 41100 Modena (IT)
(72) Inventor: BENASSI, Gian, Carlo, I-41100 Modena (IT)
(74) Representative: Vandenbroucke, Alberic
(86) International application number: PCT/GB98/00962
(87) International publication number: WO 98/047756

(56) References cited:
- EP-A- 0 691 258

## Description

### Field of the invention

The present invention relates to a front axle suspension mechanism and steering assembly for an automotive vehicle suitable for use over uneven ground.

The present invention advantageously may be used on a utility vehicle such as a farm tractor, to which the following description refers purely by way of example.

### Background of the invention

In the following description right hand and left hand references are determined by standing at the rear of the tractor facing in a direction of forward travel. Also, in the following description, it is to be understood that terms such as "forward", "rearward", "upward", etc., are words of convenience and are not to be construed as limiting terms.

In farming practice, it is generally known to employ wheel-mounted tractors for towing mechanical or chemical land processing machinery. The frame, which on most tractor models comprises the engine block, normally supports at the front a steering assembly having a front axle wit steerable wheels mounted thereon. EP-A-0.691.258, on which the preamble of claim 1 is based, discloses a steering assembly having a front axle of a T-shaped configuration which is rotatably connected to the frame. The front axle is laterally defined by pivoting end portions, carrying the steerable wheels, and has a rearwardly extending tubular body which is connected to the frame by means of a spherical joint. Each steerable wheel is connected to the tubular body by means of a linear actuator by which it is rotated relative to the front axle. The steering assembly further comprises a support link connecting the tubular body to the frame at a point close to the rear wheel end of the tractor. The support link is connected to the tubular body by a substantially vertical cylindrical hinge, and to the frame by a spherical joint, allowing the front axle on the one hand to pivot laterally around the vertical hinge and on the other hand to oscillate vertically about a horizontal axis. With the foregoing configuration, the support link is mainly subjected to traction. The steering assembly finally comprises a pair of tie rods, each of which is connected at one end to the frame at a location alongside a front portion of the tubular body and at the other end to the respective steerable wheels.

It is observed that the distance between the spherical joint, connecting the front axle to the frame, and the axis of the rear wheels is less than the distance between the front and rear wheels. As such and due to the presence of the tie rods, the front axle is rotated with respect to the spherical joint at each opposed actuation of the linear actuators. As a consequence, the amount of motion of the steerable wheels with respect to the frame is a combination of the rotation of each steerable wheel with respect to the corresponding end of the front axle, and of the front axle with respect to the frame, providing for excellent manoeuvring of the vehicle in confined spaces.

It will be appreciated from the foregoing that a steering assembly as described above provides for a high degree of manoeuvrability of the tractor under various conditions, and for maintaining ground contact of as well the steerable wheels as the rear wheels even when travelling over rough, uneven ground. However, as the resistive forces on the front axle opposed by the terrain to the forward movement of the tractor are transmitted directly to the frame by the support link, which conversely also transmits the loads experienced by the frame to the axle, the effectiveness of the above steering assembly is reduced when driving over rough ground or at elevated speeds, in which case handling the tractor may be particularly strenuous and may result in the driver becoming distracted due to fatigue.

### Object of the invention

It is therefore an object of the present invention to provide a steering assembly for an automotive vehicle, designed to overcome the aforementioned drawbacks.

### Summary of the invention

According to the present invention, a steering assembly for a utility vehicle is provided having a supporting frame; said assembly comprising :
- a steering axle rotatable with respect to said frame and comprising :
   - an axle member defined transversely by end portions pivotable about respective substantially vertical axes; each said end portion supporting for rotation a steerable wheel; and
   - a member rigidly connected to said axle member and rotatably connecting the steering axle to said frame through a first spherical joint; and
- connecting means provided in-between said steering axle and said frame for limiting the movement of said steering axle relative to said frame in a given direction,
the steering assembly being characterised in that said connecting means comprises shock-absorbing means for elastically disconnecting said steering axle from said frame.

### Brief description of the drawings

A steering assembly in accordance with the present invention will now be described in greater detail, by way of example, with reference to the accompanying drawings, in which :
Figure 1 shows a schematic plan view of a first embodiment of a steering assembly in accordance with the present invention;
Figure 2 is a side view of Figure 1;
Figure 3 shows a schematic plan view of a second embodiment of the Figure 1 assembly;
Figure 4 shows a schematic plan view of a third embodiment of the Figure 1 assembly;
Figure 5 is a side view of Figure 4;
Figure 6 shows a schematic plan view of a fourth embodiment of the Figure 1 assembly;
Figure 7 is a frontal section of an alternative mounting member applicable to the third embodiment shown in Figure 4; and
Figure 8 is a side view of Figure 7.

### Detailed description of the preferred embodiments

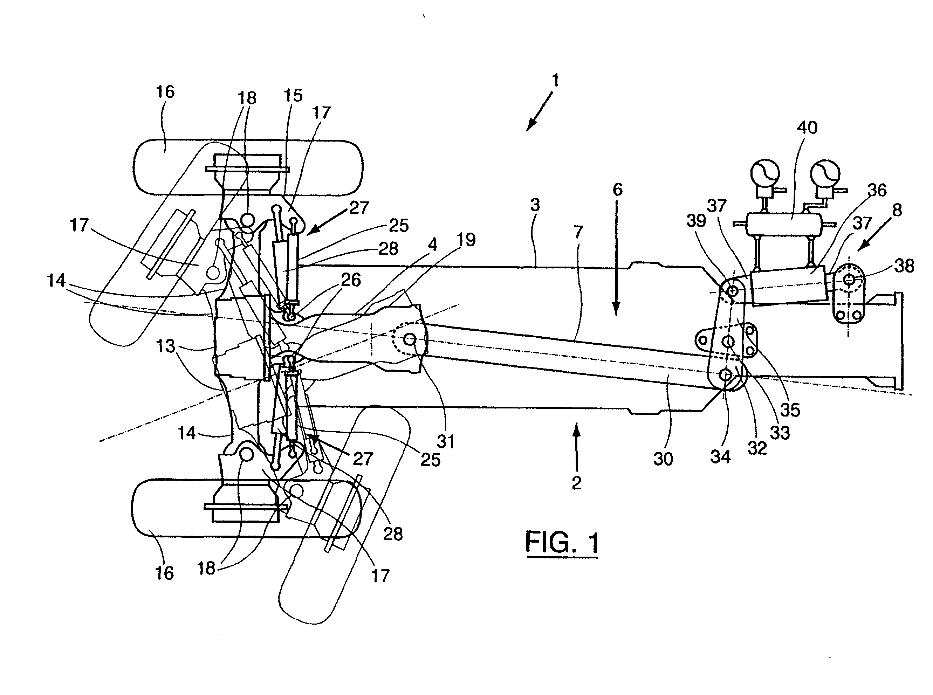

Reference 1 in Figure 1 indicates as a whole a steering assembly for a utility vehicle, such as a tractor 2, which, for the sake of simplicity, is shown only partly in the accompanying drawings.

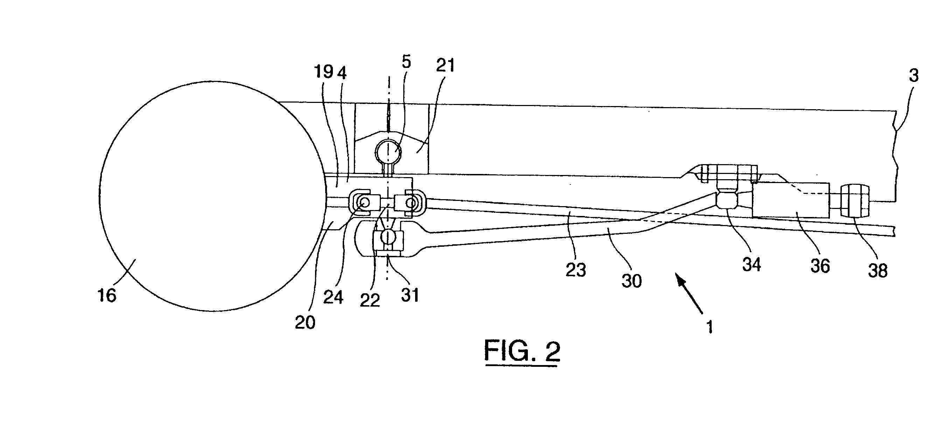

With reference to Figures 1 and 2, tractor 2 comprises a longitudinal supporting frame or chassis 3, and assembly 1 comprises a T-shaped front axle 4 connected to the underside of frame 3 (Figure 2) by means of a spherical joint 5. Assembly 1 further comprises a connecting unit 6 located between front axle 4 and frame 3 to support front axle 4, which would otherwise rotate clockwise, as seen in Figure 2, under the weight of frame 3. Connecting unit 6 provides for transmitting the loads on front axle 4 to frame 3, and comprises an articulated quadrilateral structure 7, and a shock-absorbing device 8. More specifically, shock-absorbing device 8 co-operates with the structure 7 to disconnect front axle 4 mechanically from frame 3 as such providing for smoother load transmission between front axle 4 and frame 3.

With reference to Figures 1 and 2, front axle 4 comprises a transverse axle portion 13 with two lateral arms 14, each of which is hollow and defined by a respective end portion 15 connected to a steerable wheel 16 via the interposition of a rocking body 17 hinged about an axis 18 substantially perpendicular to the corresponding arm 14. Front axle 4 further comprises a member 19 in the form of a tubular body or trumpet portion, rigidly connected to the axle portion 13 and extending rearwardly therefrom. At the top rear end of the body 15, a head 20 of a joint 5 is provided which engages inside a cylindrical seat 21 connected rigidly to frame 3. It should be noted that axle 4 houses an axle shaft 22 (Figure 2), which is driven by a transmission shaft 23 via a differential 24 housed in the tubular body 19. The shaft 22 selectively may drive the front wheels when 4-wheel drive is desired.

Assembly 1 also comprises a pair of tie rods 25, each of which connects one of the end portions 15 of the front axle 4 to the frame 3 through a boss 26, which is attached to the frame 3 intermediate the wheels 16 and facing the front end of tubular body 19. More specifically, the two tie rods 25 together define a constraint 27 causing the tubular body 19 and hence the front axle 4 to rotate in the same direction as the wheels 16 are pivoted, as is explained in greater detail in EP-A-0.691.258. It will be appreciated that the combined rotation of the wheels 16 about the pivot axis 18 of the respective end portions 15 and of the tubular body 19 around joint 5 greatly reduces the steering radius of tractor 2.

In addition, assembly 1 comprises a pair of double-acting hydraulic linear actuators 28, each connected to the tubular body 19 and to a respective end portion 15, and which are operated in a conventional manner in opposite phase to rotate the wheels 16 with respect to the axle 4. Simultaneously, the constraint 27 causes front axle 4 to rotate about seat 21 of joint 5, to enable tractor 2 to be manoeuvred in confined spaces.

The articulated structure 7 comprises a connecting rod defined by an elongated body 30 connected to the tubular body 19 by a spherical joint 31 provided underneath joint 5. The structure 7 further comprises a vertical lever arm defined by the portion of the tubular body 19 between the joints 5 and 31 and a horizontal lever arm 32 hinged to frame 3 by a hinge 33 having a vertical axis. At the distal end of joint 31, elongated body 30 is connected to lever 32 by a spherical joint 34, whereby the articulated quadrilateral structure 7 becomes a spatial type structure. It will be appreciated that the fixed base of the quadrilateral structure 7 coincides with frame 3 of tractor 2. It also should be noted that, in the present case, lever 32 functions as a so-called first-category lever.

Lever 32, in the form of a straight bell-crank, has an extension 35 extending on the opposite side of hinge 33 relative to spherical joint 34. The shock-absorbing device 8 comprises a known elongated shock absorber 36 having annular portions 37 for connection to the frame 3 on the one hand and to the extension 35 on the other hand. More specifically, the shock absorber 36 is connected to the frame 3 on the opposite side of hinge 33 relative to joint 31 by a hinge 38 and to lever 32 by a hinge 39, both hinges having a hinge axis parallel to that of hinge 33.

With reference to Figure 1, the shock absorber 36 is of the hydro-pneumatic type, and comprises a stiffness regulating member 40 having known hydro-pneumatic accumulators. The member 40 is operable to adapt the response of the shock absorber 36 to the characteristics of the ground over which tractor 2 is driven.

Referring specifically to Figures 1 and 2, it should be noted that elongated body 30 is normally located partially to the side of and underneath the transmission shaft 23 and therefore in no way interferes therewith.

The operation of steering assembly 1 is clearly understandable from the foregoing description without having to go into any further detail. It will be appreciated that, in response to ground-induced loads on the tractor 2, the front axle 4 will oscillate about joint 5 in a dampened manner by means of the shock absorber 36, thus providing for smooth operation of the tractor 2 over rough ground or when driving at elevated speeds. Clearly, changes may be made to the assembly 1 as described and illustrated herein without, however, departing from the scope of the present invention.

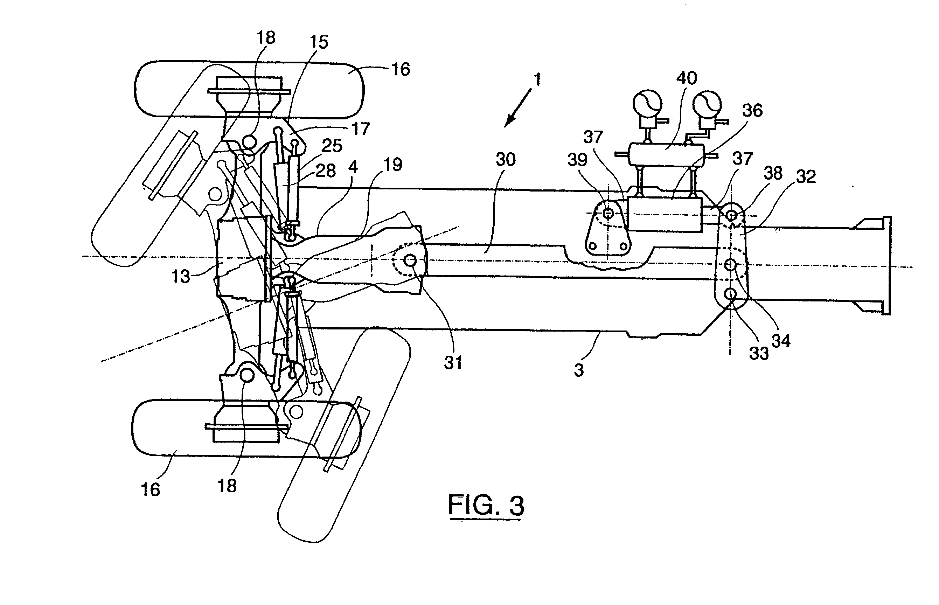

For example, as shown in Figure 3, to reduce the forces on shock absorber 36, the locations of joint 34 and hinge 33 are inverted, so that lever 32, which in Figure 1 is hinged centrally to frame 3, is now hinged at a lateral end and operates as a so-called second-category lever.

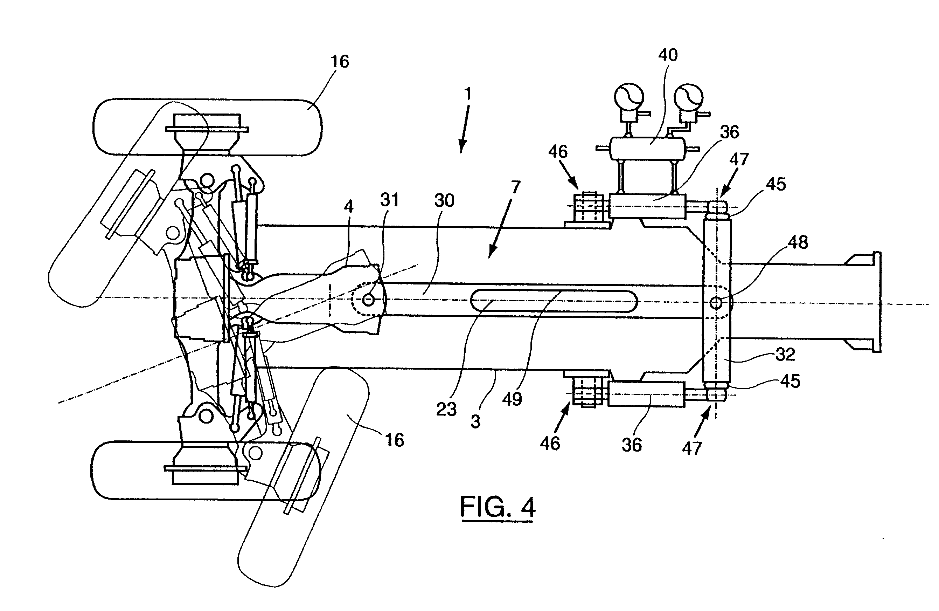

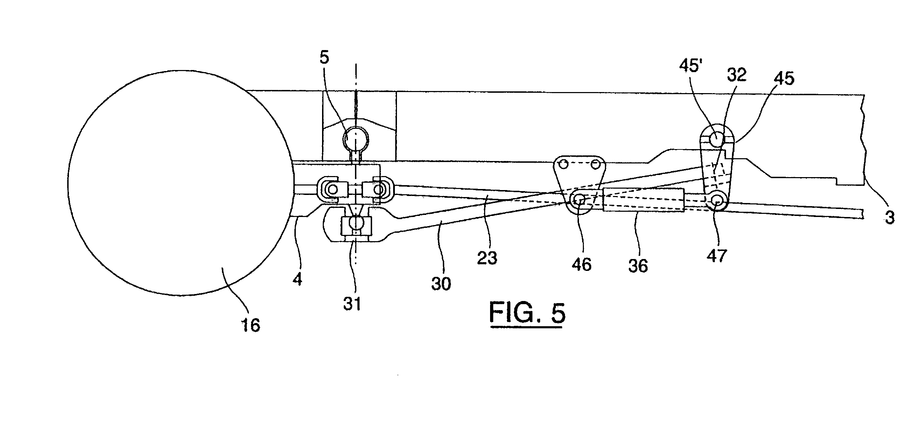

With reference to Figures 4 and 5, lever 32 is modified and is delimited at its transverse ends by a pair of substantially identical, right-angled portions 45, thereby defining an H-like structure. The top ends of the portions 45 are pivotally connected to the frame 3 at 45'. Frame 3 further carries a pair of shock absorbers 36, only one of which is shown with its associated regulating member 40 for the sake of simplicity. Each shock absorber 36 is hinged to the frame 3 by a horizontal hinge 46, and is connected to one of the portions 45 at the lower end thereof by a hinge 47 parallel to hinge 46. In this arrangement, the lever 32 is held more freely from the frame 3 and is maintained in a floating manner by the two shock absorbers 36. Elongated body 30 is attached to the lever 32 through a spherical joint 48. As shown in Figure 4, elongated body 30 has a slot 49 through which the longitudinally extending transmission shaft 23 is guided.

Of course, if desired, the pair of hydro-pneumatic shock absorbers 36 may be substituted by a pair of springs of equivalent stiffness.

It is seen in Figure 5 that the support structure 32, 45 is upwardly offset from a horizontal plane through the lowest part of joint 31. This means that the provision of the shock absorbing mechanism does not impair the ground clearance.

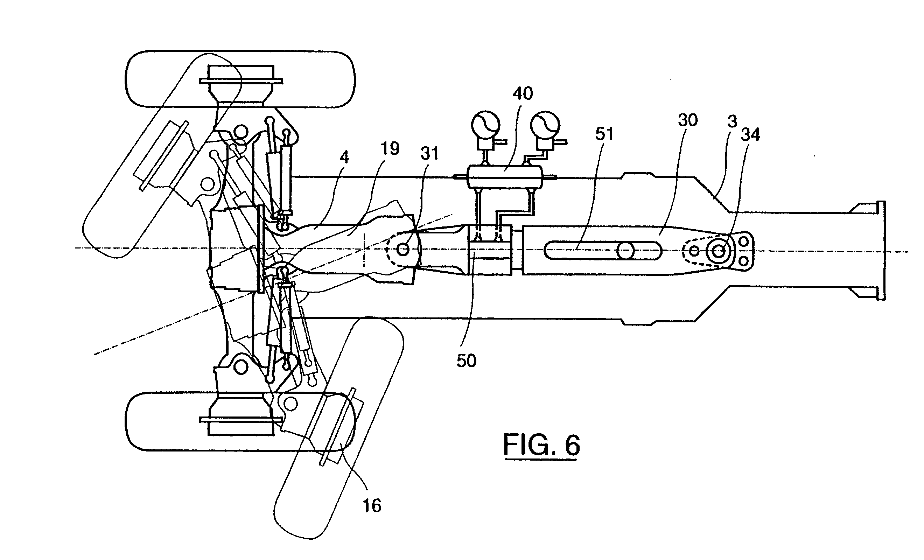

Having regard of Figure 6, assembly 1 is greatly simplified by modifying elongated body 30, which, in this case, is composed of two parts connected to each other through the interposition of a pair of shock absorbers 50 functionally identical to the shock absorbers 36 of the previous Figures but obviously smaller in size. Elongated body 30 is connected to frame 3 directly by a spherical joint 34, and has an elongated slot 51 for guiding the transmission shaft 23 therethrough.

Again, if desired, the pair of hydro-pneumatic shock

absorbers 50 may of course be replaced by a pair of springs having together an equivalent stiffness, or by a single spring.

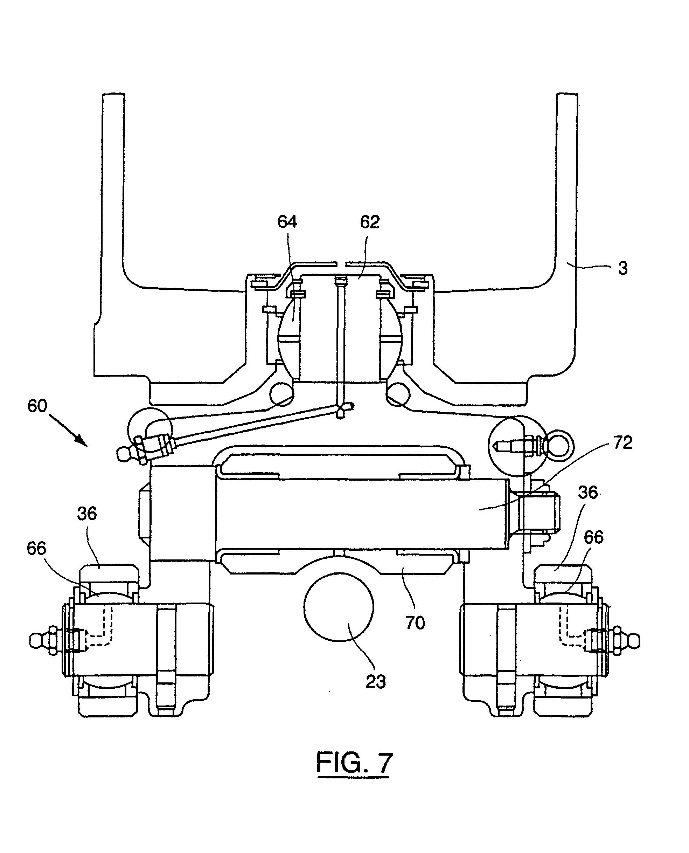

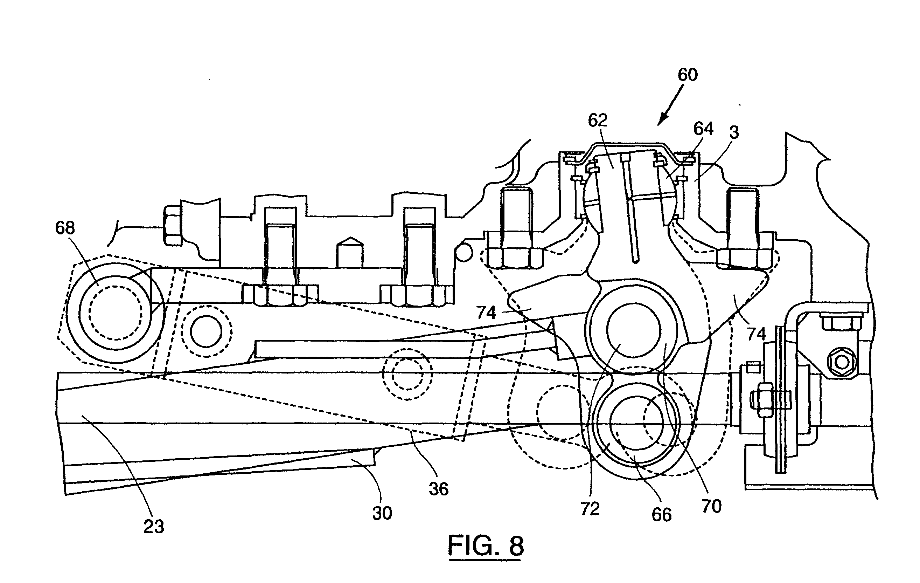

In Figures 7 and 8 an alternative mounting structure 60 for the H-shaped structure 32, 45 of Figure 5 is shown. The structure 60 is shaped as an inverted U having a cylindrical extension 62 which is freely rotatably attached to the frame 3 by means of a spherical joint 64. At either outward side of the inverted U, a shock absorber 36, shown in phantom in Figure 8, is pivotably attached to the structure 60 through spherical joints 66. The shock absorbers 36 in turn are pivotably attached to the frame 3 by means of spherical joints 68, only one of which is shown in Figure 8. The elongated body 30 is provided at its rearward end with a cylindrical hub 70 which fits over a pin 72 maintained in-between the two legs of the inverted U structure 60. The elongated body 30 again has a slot for allowing the transmission shaft 23 to pass through in whatever position of the body 30 without interference. It will be understood that the provision of all the spherical joints allows the structure 60 with associated shock absorbers 36 to be moved in various directions, so as to be able to respond to the movement imposed by the elongated member 30.

To restrict the shock absorbing movement of the elongated body 30, and hence of the front axle 4, in-between predetermined limits, the structure 60 is provided with front and rear abutment extensions 74 which abut the frame 3 when in an extreme position, as shown in dashed lines in Figure 8. As such, the abutments 74 already restrict further movement of the elongated body 30 before the shock absorbers 36 reach their extreme operating positions, thereby preventing the shock absorbers to be subjected to elevated forces at their end-of-stroke positions.

It will be appreciated that the positioning of the pin 72 in-between the joint 64 and the attachment points 66 of the shock absorbers 36 thereby creating a larger lever arm for the shock absorbers, is advantageous for reducing the forces transmitted to the shock absorbers 36.

## Claims

1. A steering assembly (1) for a utility vehicle (2) having a supporting frame (3); said assembly (1) comprising:
- a steering axle (4) rotatable with respect to said frame (3) and comprising :
- an axle member (13) defined transversely by end portions (15) pivotable about respective substantially vertical axes (18); each said end portion (15) supporting for rotation a steerable wheel (16); and
- a member (19) rigidly connected to said axle member (13) and rotatably connecting the steering axle (4) to said frame (3) through a first spherical joint (5); and
- connecting means (6) provided in-between said steering axle (4) and said frame (3) for limiting the movement of said steering axle (4) relative to said frame (3) in a given direction; and
**characterised in that** said connecting means (6) comprises shock-absorbing means (8) for elastically disconnecting said steering axle (4) from said frame (3).

2. An assembly according to claim 1, **characterised in that** it comprises :
- control means (28) provided in-between said end portions (15) and said member (19) for rotating said end portions (15) with respect to said steering axle (4); and
- a pair of rods (25), each of which is located between a said end portion (15) and said frame (3) to cause said steering axle (4) to rotate with respect to said first spherical joint (5).

3. An assembly according to claim 1 or 2, **characterised in that** said connecting means (6) comprises a first lever (30) connected to said front axle (4), close to said first spherical joint (5); and a second lever (32) connected to said first lever (30) at a distal end thereof by a second spherical joint (34).

4. An assembly according to claim 3, **characterised in that** said second lever (32) is connected to said frame (3) on the opposite side of said first spherical joint (5) relative to said steerable wheels (16) by means of a first hinge (33) ; said member (19) and said first and second levers (30, 32) together defining an articulated, quadrilateral structure (7) connected to said frame (3) by said first spherical joint (5) and said first hinge (33).

5. An assembly according to claim 4, **characterised in that** said shock-absorbing means (8) comprises an elastic member (36) connected to said second lever (32) by means of a second hinge (39) to at least partially absorb the load transmitted to said second lever (32) by said first lever (30).

6. An assembly according to claim 5, **characterised in that** said first hinge (33) is provided intermediate said second spherical joint (34) and said second hinge (39); said second hinge (39) having a substantially vertical hinge axis.

7. An assembly according to claim 5, **characterised in that** said second spherical joint (34) is located in-between said first and second hinges (33, 39); said second hinge (39) having a substantially vertical hinge axis.

8. An assembly according to claim 5 **characterised in that** said elastic member (36) is of adjustable stiffness.

9. An assembly according to claim 5, **characterised in that** said elastic member (36) comprises a hydro-pneumatic shock absorber (36) of adjustable stiffness.

10. An assembly according to claim 3, **characterised in that** said second lever (32) is provided with end portions (45) standing perpendicular relative thereto, each of which is connected to said frame (3) on the one hand directly by means of a hinge (-) and on the other hand indirectly through said shock-absorbing means (8).

11. An assembly according to claim 2, **characterised in that** said connecting means (6) comprises an elongated body (30) connected to said frame (3) by a second spherical joint (34) provided on the opposite side of said first spherical joint (5) relative to said steerable wheels (16); said elongated body (30) being hingeably connected to said member (19) close to said first spherical joint (5) and consisting of at least two parts connected elastically to each other by said shock-absorbing means to elastically disconnect said steering axle (4) from said frame (3).

12. An assembly according to any of the foregoing claims, **characterised in that** said first lever (30) is connected to said steering axle (4) by means of a third spherical joint (31).

13. An assembly according to claim 1 **characterised in that** said connecting means (6) comprises :
- a mounting structure (60) hingeably connected to the frame (3) through a single pivot (64); and
- a lever (30) connected at one end to said front axle (4), close to said first spherical joint (5), and at the other end to said mounting structure (60); said shock-absorbing means (8, 36) being provided in-between said mounting structure (60) and said frame (3).

14. An assembly according to claim 13 **characterised in that** said mounting structure (60) is shaped as an inverted U, having an upward extension (62) for connection to the frame (3) through said single pivot (64), formed by a spherical joint.

15. An assembly according to claim 14 **characterised in that** said shock-absorbing means (8, 36) are attached to said mounting structure (60) by means of spherical joints (66); said lever (30) being connected to said mounting structure (60) at a location in-between said single pivot (64) and said spherical joints (66).

16. An assembly according to claim 13 and any claim dependent therefrom, **characterised in that** said mounting structure (60) comprises abutment members (74) for engaging the frame (3) in extreme positions of said mounting structure (60), thereby limiting the stroke of said shock-absorbing means (8, 36).

## Patentansprüche

1. Lenkungsbaugruppe (1) für ein Nutzfahrzeug (2), das einen Tragrahmen (3) aufweist, wobei die Baugruppe (1) folgendes umfaßt:
- eine Lenkachse (4), die gegenüber dem Rahmen (3) drehbar ist und folgendes umfaßt:
- ein Achsbauteil (13), das in Querrichtung durch Endabschnitte (15) gebildet ist, die um jeweilige im wesentlichen vertikale Achsen (18) schwenkbar sind, wobei jeder Endabschnitt (15) ein lenkbares Rad (16) für eine Drehung haltert; und
- ein Bauteil (19), das starr mit dem Achsbauteil (13) verbunden ist und die Lenkachse (4) drehbar mit dem Rahmen (3) über ein erstes Kugelgelenk (5) verbindet, und
- eine Verbindungseinrichtung (6), die zwischen der Lenkachse (4) und dem Rahmen (3) vorgesehen ist, um die Bewegung der Lenkachse (4) gegenüber dem Rahmen (3) in einer vorgegebenen Richtung zu begrenzen, und
- **dadurch gekennzeichnet, daß** die Verbindungseinrichtung (6) stoßdämpfende Einrichtungen (8) zur elastischen Trennung der Lenkachse (4) von dem Rahmen (3) umfaßt.

2. Baugruppe nach Anspruch 1, **dadurch gekennzeichnet, daß** sie folgendes umfaßt:
- Steuereinrichtungen (28), die zwischen den Endabschnitten (15) und dem Bauteil (19) angeordnet sind, um die Endabschnitte (15) bezüglich der Lenkachse (4) zu drehen; und
- zwei Spurstangen (25), von denen jede zwischen dem Endabschnitt (15) und dem Rahmen (3) angeordnet ist, um eine Drehung der Lenkachse (4) gegenüber dem ersten Kugelgelenk (5) zu bewirken.

3. Baugruppe nach Anspruch 1 oder 2, **dadurch gekennzeichnet, daß** die Verbindungseinrichtungen (6) einen ersten Hebel (30), der mit der Vorderachse (4) in der Nähe des ersten Kugelgelenks (5) verbunden ist und einen zweiten Hebel (32) umfassen, der mit dem ersten Hebel (30) an einem femliegenden Ende hiervon über ein zweites Kugelgelenk (34) verbunden ist.

4. Baugruppe nach Anspruch 3, **dadurch gekennzeichnet, daß** der zweite Hebel (32) mit dem Rahmen (3) auf der gegenüberliegenden Seite des ersten Kugelgelenks (5) bezüglich der lenkbaren Räder (16) über ein erstes Gelenk (33) verbunden ist, daß das Bauteil (19) und die ersten und zweiten Hebel (30, 32) zusammen eine gelenkige vierseitige Struktur (7) bilden, die mit dem Rahmen (3) über das erste Kugelgelenk (5) und das erste Gelenk (33) verbunden ist.

5. Baugruppe nach Anspruch 4, **dadurch gekennzeichnet, daß** die stoßdämpfenden Einrichtungen (8) ein elastisches Element (36) umfassen, das mit dem zweiten Hebel (32) über ein zweites Gelenk (39) verbunden ist, um zumindest teilweise die an dem ersten Hebel (30) auf den zweiten Hebel (32) übertragene Last zu absorbieren.

6. Baugruppe nach Anspruch 5, **dadurch gekennzeichnet, daß** das erste Gelenk (33) zwischen dem zweiten Kugelgelenk (34) und dem zweiten Gelenk (39) angeordnet ist, wobei das zweite Gelenk (39) eine im wesentlichen vertikale Gelenkachse aufweist.

7. Baugruppe nach Anspruch 5, **dadurch gekennzeichnet, daß** das zweite Kugelgelenk (34) zwischen den ersten und zweiten Gelenken (33, 39) angeordnet ist, wobei das zweite Gelenk (39) eine im wesentlichen vertikale Gelenkachse aufweist.

8. Baugruppe nach Anspruch 5, **dadurch gekennzeichnet, daß** das elastische Element (36) eine einstellbare Steifigkeit aufweist.

9. Baugruppe nach Anspruch 5, **dadurch gekennzeichnet, daß** das elastische Element (36) einen hydropneumatischen Stoßdämpfer (36) mit einstellbarer Steifigkeit umfaßt.

10. Baugruppe nach Anspruch 3, **dadurch gekennzeichnet, daß** der zweite Hebel (32) mit Endabschnitten (45) versehen ist, die senkrecht zu diesem stehen und die jeweils mit dem Rahmen einerseits direkt über ein Gelenk (-) und andererseits indirekt über die Stoßdämpfer-Einrichtungen (8) verbunden sind.

11. Baugruppe nach Anspruch 2, **dadurch gekennzeichnet, daß** die Verbindungseinrichtung (6) einen langgestreckten Körper (30) umfaßt, der mit dem Rahmen (3) über ein zweites Kugelgelenk (34) verbunden ist, das auf der gegenüberliegenden Seite des ersten Kugelgelenks (5) bezüglich der lenkbaren Räder (16) vorgesehen ist, daß der langgestreckte Körper (30) gelenkig mit dem Bauteil (19) in der Nähe des ersten Kugelgelenks (5) verbunden ist und aus zumindest zwei Teilen besteht, die elastisch miteinander über die stoßdämpfenden Einrichtungen verbunden sind, um elastisch die Lenkachse (4) von dem Rahmen (3) zu trennen.

12. Baugruppe nach einem der vorhergehenden Ansprüche, **dadurch gekennzeichnet, daß** der erste Hebel (30) mit der Lenkachse (4) über ein drittes Kugelgelenk (31) verbunden ist.

13. Baugruppe nach Anspruch 1, **dadurch gekennzeichnet, daß** die Verbindungseinrichtung (6) folgendes umfaßt:
- eine Befestigungsstruktur (60), die gelenkig mit dem Rahmen (3) über einen einzigen Schwenkpunkt (64) verbunden ist; und
- einen Hebel (30), der an einem Ende mit der Vorderachse (4) in der Nähe des ersten Kugelgelenks (5) und am anderen Ende mit der Befestigungsstruktur (60) verbunden ist, wobei die stoßdämpfenden Einrichtungen (8, 36) zwischen der Befestigungsstruktur (60) und dem Rahmen (3) vorgesehen sind.

14. Baugruppe nach Anspruch 13, **dadurch gekennzeichnet, daß** die Befestigungsstruktur (60) in Form eines umgekehrten U mit einer nach oben gerichteten Verlängerung (62) zur Verbindung mit dem Rahmen (3) über den einzelnen Schwenkpunkt (64) geformt ist, der durch ein Kugelgelenk gebildet ist.

15. Baugruppe nach Anspruch 14, **dadurch gekennzeichnet, daß** die stoßdämpfenden Einrichtungen (8, 36) an der Befestigungsstruktur (60) über Kugelgelenke (66) angebracht sind, wobei der Hebel (30) mit der Befestigungsstruktur (60) an einer Stelle zwischen dem einzelnen Schwenkpunkt (64) und den Kugelgelenken (66) verbunden ist.

16. Baugruppe nach Anspruch 13 und irgendeinem hiervon abhängigen Anspruch, **dadurch gekennzeichnet, daß** die Befestigungsstruktur (60) Anschlagelemente (74) für den Eingriff mit dem Rahmen (3) in Extremstellungen der Befestigungsstruktur (60) aufweist, wodurch der Hub der stoßdämpfenden Einrichtungen (8, 36) begrenzt wird.

## Revendications

1. Assemblage de direction (1) pour un véhicule utilitaire (2) possédant un châssis de support (3); ledit assemblage (1) comprenant:
- un essieu de direction (4) pouvant tourner par rapport audit châssis (3) et comprenant:
- un organe d'essieu (13) défini transversalement par des parties d'extrémité (15) pivotant autour d'axes respectifs substantiellement verticaux (18); chacune desdites parties d'extrémité (15) soutenant en rotation une roue directrice (16); et
- un organe 19) relié rigidement audit organe d'essieu (13) et accouplant rotativement l'essieu de direction (4) audit châssis (3) par l'intermédiaire d'un premier joint sphérique (5); et
- des moyens de liaison 6) prévus entre ledit essieu de direction (4) et ledit châssis (3) pour limiter le mouvement dudit essieu de direction (4) par rapport audit châssis (3) dans une direction donnée;
et **caractérisé en ce que** lesdits moyens de liaison (6) comprennent des moyens d'amortissement (8) destinés à découpler élastiquement ledit essieu de direction (4) par rapport audit châssis (3).

2. Assemblage selon la revendication 1, **caractérisé en ce qu'**il comprend:
- des moyens de commande (28) prévus entre lesdites parties d'extrémité (15) et ledit organe (19) afin de faire tourner lesdites parties d'extrémité (15) par rapport audit essieu de direction (4); et
- une paire de barres (25), chacune d'elles étant située entre une desdites parties d'extrémité (15) et ledit châssis (3) afin d'entraîner la rotation dudit essieu de direction (4) par rapport audit premier joint sphérique (5).

3. Assemblage selon la revendication 1 ou 2, **caractérisé en ce que** lesdits moyens de liaison (6) comprennent un premier levier (30) relié audit essieu avant (4), à proximité dudit premier joint sphérique (5) ; et un second levier (32) relié audit premier levier (30) à une extrémité distale de lui par un second joint sphérique (34).

4. Assemblage selon la revendication 3, **caractérisé en ce que** ledit second levier (32) est relié audit châssis (3) du côté opposé audit premier joint sphérique (5) par rapport auxdites roues directrices (16), à l'aide d'une charnière (33); ledit organe (19) et lesdits premier et second leviers (30, 32) définissant ensemble une structure quadrilatérale articulée (7) reliée audit châssis (3) par ledit premier joint sphérique (5) et ladite première charnière (33).

5. Assemblage selon la revendication 4, **caractérisé en ce que** lesdits moyens d'amortissements (8) comprennent un élément élastique (36) relié audit second levier (32) à l'aide d'une seconde charnière (39) afin d'absorber au moins partiellement la charge transmise audit second levier (32) par ledit premier levier (30).

6. Assemblage selon la revendication 5, **caractérisé en ce que** ladite première charnière (33) est prévue entre ledit second joint sphérique (34) et ladite seconde charnière (39); ladite seconde charnière (39) possédant un axe de charnière substantiellement vertical.

7. Assemblage selon la revendication 5, **caractérisé en ce que** ledit second joint sphérique (34) est situé entre lesdites première et seconde charnières (33, 39); ladite seconde charnière (39) possédant un axe de charnière substantiellement vertical.

8. Assemblage selon la revendication 5 **caractérisé en ce que** ledit élément élastique (36) est de raideur réglable.

9. Assemblage selon la revendication 5, **caractérisé en ce que** ledit élément élastique (36) comprend un amortisseur hydropneumatique (36) de raideur réglable.

10. Assemblage selon la revendication 3, **caractérisé en ce que** ledit second levier (32) est pourvu de parties d'extrémité (45) se dressant perpendiculairement à lui, chacune d'elles est reliée audit châssis (3) d'une part directement à l'aide d'une charnière (-) et d'autre part indirectement par l'intermédiaire desdits moyens d'amortissement (8).

11. Assemblage selon la revendication 2, **caractérisé en ce que** lesdits moyens de liaison (6) comprennent un corps allongé (30) relié audit châssis (3) par un second joint sphérique (34) prévu au côté opposé dudit premier joint sphérique (5) par rapport auxdites roues directrices (16); ledit corps allongé (30) étant relié avec articulation audit organe (19) à proximité dudit premier joint sphérique (5) et étant constitué d'au moins deux parties reliées élastiquement l'une à l'autre à l'aide de moyens d'amortissement afin de découpler élastiquement ledit essieu de direction (4) par rapport audit châssis (3).

12. Assemblage selon l'une quelconque des revendications précédentes, **caractérisé en ce que** ledit premier levier (30) est relié audit essieu de direction (4) au moyen d'un troisième joint sphérique (31).

13. Assemblage selon la revendication 1, **caractérisé en ce que** lesdits moyens de liaison (6) comprennent
- une structure de montage (60) reliée avec articulation au châssis (3) par l'intermédiaire d'un pivot unique (64); et
- un levier (30) relié à une extrémité dudit essieu avant (9), à proximité dudit premier joint sphérique (5), et à l'autre extrémité avec ladite structure de montage (60), lesdits moyens d'amortissement (8, 36) étant prévus entre ladite structure de montage (60) et ledit châssis (3).

14. Assemblage selon la revendication 13 **caractérisé en ce que** ladite structure de montage (60) est sous la forme d'un U inversé, possédant une extension vers le haut (62) pour une liaison au châssis (3) par l'intermédiaire d'un pivot unique (64), constitué par un joint sphérique.

15. Assemblage selon la revendication 14 **caractérisé en ce que** lesdits moyens d'amortissement (8, 36) sont attachés à ladite structure de montage (60) à l'aide de joints sphériques (66); ledit levier (30) étant relié à ladite structure de montage (60) en une position située entre ledit pivot unique (64) et lesdits joints sphériques (66).

16. Assemblage selon la revendication 13 et une quelconque revendication y étant dépendante, **caractérisé en ce que** ladite structure de montage (60) comprend des organes de butée (74) destinés à s'engager avec le châssis (3) dans des positions extrêmes de ladite structure de montage (60), en limitant ainsi la course desdits moyens d'amortissement (8, 36).
